# EUROPEAN PATENT APPLICATION

(11) **EP 0 907 166 A2**
(43) Date of publication of application: **07.04.1999**
(21) Application number: 98118398.1
(22) Date of filing: 29.09.1998
(51) Int. Cl.: G11B 11/10

(54) **Magnetic field generator for magneto-optics memory apparatus**

(30) Priority: 01.10.1997 JP 268370/97
(71) Applicant: KONICA CORPORATION, Tokyo (JP)
(72) Inventor: Sekine, Takehiko, Hachioji-shi, Tokyo (JP)
(74) Representative: Henkel, Feiler, Hänzel

(57) **Abstract**

In a magnetic field generator provided with a magnet to apply a magnetic field onto a magneto-optics recording medium; and a driver for moving said magnet from a first position where said magnet applies a magnetic field in a direction substantially perpendicular to the surface of said magneto-optics recording medium, to a second position where the direction of the magnetic field is opposite to that of the first position; there is further provided a conductive member located near the pole of said magnet parking at the first or the second position.

## Description

### BACKGROUND OF THE INVENTION

The present invention relates to a magnetic field generator incorporated in an apparatus such as a magneto-optics disk drive, etc. wherein a magneto-optical medium is adopted as the recording means.

Since the magneto-optics effect is utilized for recording and erasing data on the medium, the magneto-optics disk drive requires a magnetic field generator to apply a magnetic field which is substantially perpendicular to the surface of the recording medium and has a strength larger than a predetermined value. In addition, the directions of the magnetic field in recording the data is opposite to that in erasing the data.

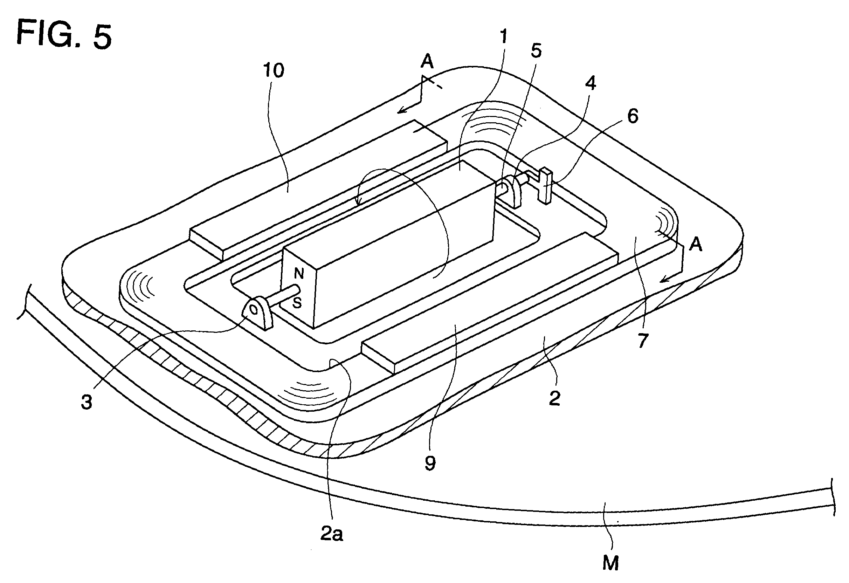

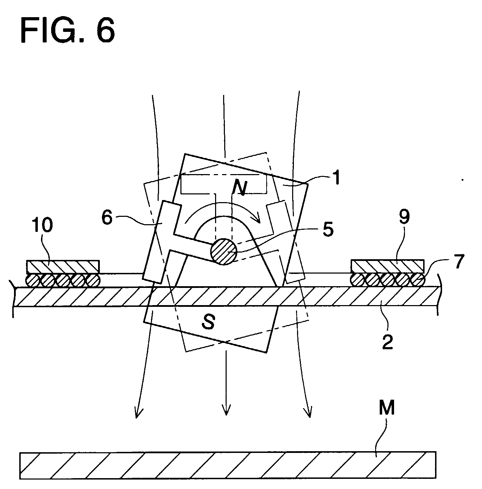

Referring to Fig. 5 and Fig. 6, a prior art of the magnetic field generator will be described in detail. As shown in Fig. 5, which is a perspective view of the prior art mentioned above, a base 2 is located above magneto-optics disk M and a center hole 2a is formed on base 2 in the direction perpendicular to the recording tracks fabricated on the surface of magneto-optics disk M.

A shaft 5 is located above hole 2a in the direction perpendicular to the recording tracks. Both rotatable ends of shaft 5 are supported by brackets 3 and 4 as a guiding means, which are fixed on base 2.

Magnet 1, which is magnetized perpendicular to the long axis of shaft 5, is fixed around shaft 5 and, coil 7 is mounted along the periphery of hole 2a on base 2, so that coil 7 is a driving means for magnet 1.

As shown in Fig. 6, which is a lateral cross sectional view at cross section line A-A in Fig. 5, stopper 6 is fixed at the end of shaft 5 in order to limit the rotational angle of magnet 1 an angle slightly lower than 180° (for instance, 170°), ranging from the first position of stopper 6 as designated by solid lines to the second position of it as designated by double-dotted chain lines.

In order to suppress impulsive noise caused by collisions between stopper 6 and base 2, elastic material is either employed far stopper 6 itself or attached at the collision point on base 2.

Also as shown in Fig. 5, iron plate 9 and 10 are attached onto the upper surface of coil 7.

When no electric current flows in coil 7 (i.e. in the reading mode), magnet 1 is held at the neutral position by the magnetic force between pole S and iron plate 10 as well as pole N and iron plate 9, wherein the attitude of stopper 6 is perpendicular to base 2 as shown by double-dotted chain lines in Fig. 6.

When an electric current flows in coil 7 to generate a magnetic field directed to magneto-optics disk M at the center of coil 7, magnet 1 is rotated by the generated rotational force so as to match the magnetic field direction of magnet 1 with that of coil 7, until stopper 6 contacts base 2 and reaches the first position (shown by the solid lines in Fig. 6).

Under the above conditions, an additional magnetic field is applied onto magneto-optics disk M by magnet 1 to enable, for instance, an erasing action for the recorded data.

Conversely to the above conditions, in case a counter electric current flows in coil 7, the direction of the magnetic field generated by coil 7 changes to the opposite. Then, magnet 1 is reversely rotated until stopper 6 reaches the second position (shown by the double-dotted chain lines in Fig. 6).

Under the above conditions, an additional magnetic field (the direction of which is reversed compared to the previous case) is applied onto magneto-optics disk M by magnet 1 to enable, for instance, a recording action for incoming data.

In case the magnetic flux direction of magnet 1 just coincides with that of coil 7, the rotational force for magnet 1 could not be generated, even if an electric current flows in coil 7, resulting in a non-reversal of magnet 1. In order to avoid this situation, the rotational angle of magnet 1 is limited to an angle slightly less than 180°.

Since, in the above prior art, an elastic material is either employed for stopper 6 itself or attached on base 2 to suppress the impulsive noise caused by collisions between stopper 6 and base 2, the movement of stopper 6 usually stabilises after bouncing several times on base 2 due to an elastic collision between them, when stopper 6 reaches either the first or the second position.

In regard to the prior art of the magnetic field generator shown in Fig. 5 and 6, Fig. 7(a) shows the transient state of the magnetic field applied to the magneto-optics disk M in the process of shifting the mode from erasing of data to recording, associated with the reversal of magnet 1.

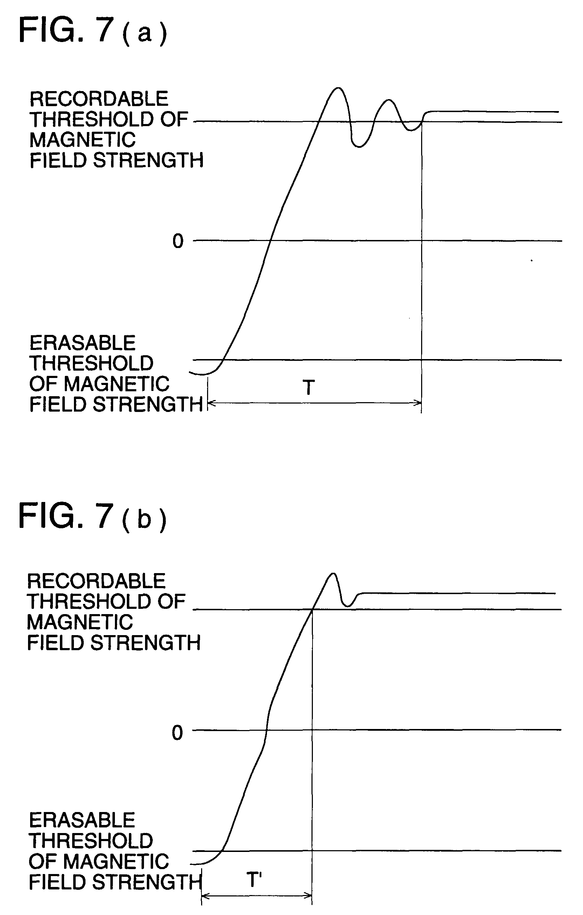

As shown in Fig. 7, the time interval required for the mode change from erasing to recording is defined as the magnetic field reversal time T.

In order to improve the total access speed of the memory device, it is desirable that the magnetic field reversal time T should be kept as short as possible. In the prior art mentioned above, however, it is difficult to shorten the magnetic field reversal time T, due to the long time interval of elastic bouncing between stopper 6 and base 2.

Although it may be possible to mount an anti-bouncing component with high viscosity as a countermeasure for the above drawback, complexity and bulkiness of such a component would arise as another problem.

### SUMMARY OF THE INVENTION

To overcome the above mentioned drawback, it is an objective of the present invention to provide a magnetic field generator in which the magnetic field reversal time T is effectively reduced with a simple configuration.

The present invention relates to a magnetic field generator comprised of;
a magnet to apply a magnetic field onto a magneto-optics recording medium;
a driving means for moving said magnet from the first position where said magnet applies a magnetic field substantially perpendicular to the surface of said magneto-optics recording medium, to the second position where the direction of the magnetic field is opposite to that of the first position,
a stopper member for stopping further movement of said magnet from the first or the second position,
a conductive member located near the pole of said magnet parked at the first or the second position.

When the magnet reaches the first or the second position, the magnet would start to bounce due to the elastic collision of the stopper member.

Bouncing of the magnet would result in induction of eddy-currents in the conductive member mounted near the pole of the magnet, since the magnetic flux applied to the conductive member would fluctuate greatly within a short period of time. These eddy-currents would also induce a magnetic flux so as to impede movement of the magnet.

As a result, the magnetic field reversal time T will be effectively shortened in association with the reduction of the number of times the magnet bounces, compared to the prior art in which no such conductive member is provided.

In addition, it is recommended that the conductive member be as thick as possible, since the strength of the eddy-currents induced in the conductive member are in proportion to the second power of it's thickness.

Although various kinds of material, such as aluminum, zinc, copper, stainless steel, etc., would be available for the conductive member, it was confirmed by the inventor's experiments that aluminum would be the most suitable for this application.

In addition, provided that the base of the magnetic field generator is a conductive material, such as aluminum, zinc, etc., the integral molding of the base and the conductive member would be recommended.

### BRIEF DESCRIPTION OF THE DRAWINGS

Other objectives and advantages of the present invention will become apparent upon reading the following detailed description and upon reference to the drawings in which:
Fig. 1 shows a perspective view of the first example of the embodiments, illustrating a main configuration of the present invention;
Fig. 2 shows a lateral cross sectional view at cross section of B-B in Fig. 1;
Fig. 3 shows a perspective view of the second example of the embodiments, illustrating another main configuration of the present invention;
Figs. 4(a) and 4(b) each shows a lateral cross sectional view from the direction of arrow B in Fig. 3;
Fig. 5 shows a perspective view of the prior art, illustrating a main configuration of the magnetic field generator;
Fig. 6 shows a lateral cross sectional view at cross section of A-A in Fig. 5;
Figs. 7(a) and 7(b) each shows the transient state of the magnetic field applied to the magneto-optics medium M in the process of shifting the mode from erasing of data to recording of them, associated with the reversal of magnet 1, wherein Fig. 7(a) and Fig. 7(b) correspond to the prior art shown in Fig. 5 and the present invention shown in Fig. 1, respectively.

### DETAILED DESCRIPTION OF THE PREFERRED EMBODIMENT

To assist in the understanding of the present invention, the configuration of a magnetic field generator which embodies the present invention will be described in detail.

### (1) The first example of the embodiments

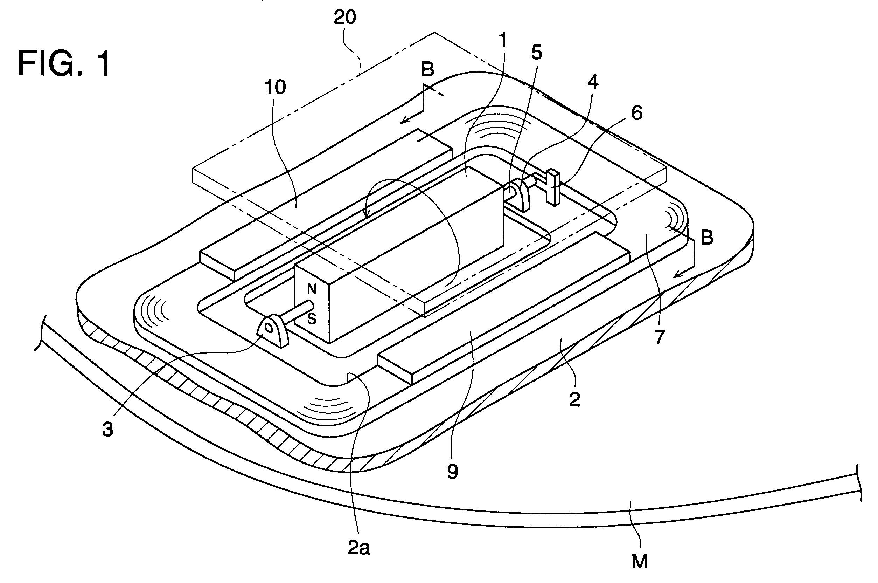

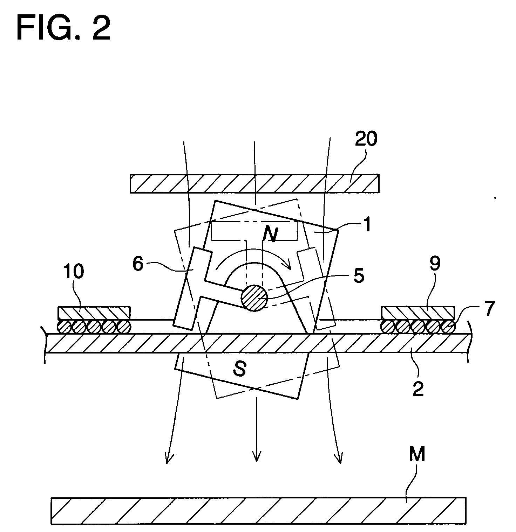

Referring to Fig. 1 and Fig. 2, the first example of the embodiments will be described.

In Fig. 1 and Fig. 2, the same portions as illustrated in Fig. 5 and Fig. 6 for the prior art will be marked with the same symbols and, therefore, explanations of them will be omitted in the following description.

The difference between the embodiment of the present invention and the prior art lies in the point that plate 20 as a conductive member (herein, for instance, aluminum) is mounted above magnet 1.

In addition, plate 20 as a conductive member should be located at such a position where a maximum amount of the magnetic flux would crosses over it, when magnet 1 parks at the first or the second position. It is desirable that a conductive member is shaped like a plate and is located at a position crossed by the extended straight line which links N and S poles of magnet 1 parked at the first or the second position. Although the recommended thickness of plate 20 is in a range of 0.1 mm to 5 mm, a practically suitable range for it would be 0.5 mm to 1 mm. Moreover, it is also desirable that the distance between a conductive member and the pole of magnet 1 parked at the first or the second position would be 1cm or less, futher better for 5 mm or less, futhermore best for 0.5 mm or less, without contacting each other.

When no electric current flows in coil 7 (i.e. in the reading mode), magnet 1 is held at the neutral position by the magnetic force between pole S and iron plate 10 as well as pole N and iron plate 9, wherein the attitude of stopper 6 is perpendicular to base 2, as shown by double-dotted chain lines in Fig. 2.

In addition, elastic materials are employed for the stopper itself or for the buffer member which the stopper would contact in order to restrict the movement of the magnet.

When an electric current flows in coil 7 to generate a magnetic field directed onto magneto-optics disk M at the center of coil 7, magnet 1 is rotated by the rotational force generated so as to match the magnetic field direction of magnet 1 with that of coil 7 until stopper 6 contacts base 2, and then, magnet 1 reaches the first position (shown by the solid lines in Fig. 2).

Under the above conditions, an additional magnetic field is applied onto magneto-optics disk M by magnet 1 to enable, for instance, an erasing action for the recorded data.

Conversely to the above conditions, in case a counter electric current flows in coil 7, the magnetic field direction generated by coil 7 changes to the opposite. Then, magnet 1 is reversely rotated until stopper 6 reaches the second position (shown by the double-dotted chain lines in Fig. 2).

Under the above conditions, an additional magnetic field (the direction of which is opposite to that of the erasing mode) is applied onto magneto-optics disk M by magnet 1 to enable, for instance, a recording action for incoming data.

When magnet 1 reaches the second position by reversal rotation from the first position, magnet 1 would start to bounce due to the elastic collision between the stopper 6 and base 2.

Bouncing of the magnet 1 would result in induction of eddy-currents in conductive plate 20, since the magnetic flux applied to conductive plate 20 would fluctuate greatly within a short period of time. These eddy-currents would also induce a magnetic flux so as to impede movement of magnet 1, resulting in reduction of the magnetic field reversal time T.

Requiring no complicated configuration change, the above mentioned effect could be attained only by mounting conductive plate 20 near the pole of magnet 1 located at the first or the second position.

In regard to the embodiment of the magnetic field generator shown in Fig. 1 and Fig. 2, Fig. 7(b) shows a transient state of the magnetic field applied to the magneto-optics disk M in the process of shifting the mode from erasing to recording, associated with the reversal of magnet 1.

As recognized by the comparison between Fig. 7(a) and Fig. 7(b), magnetic field reversal time T is drastically reduced in association with the reduction of the bounces of magnet 1, due to the magnetic flux induced by the eddy-current in plate 20.

The scope of the present invention is not limited within the above mentioned embodiment. For instance, it is also effective to mount the plate 20 in the space between magnet 1 and the magneto-optics disk M, instead of mounting it above magnet 1 as described in the above embodiment.

### (2) The second example of the embodiments

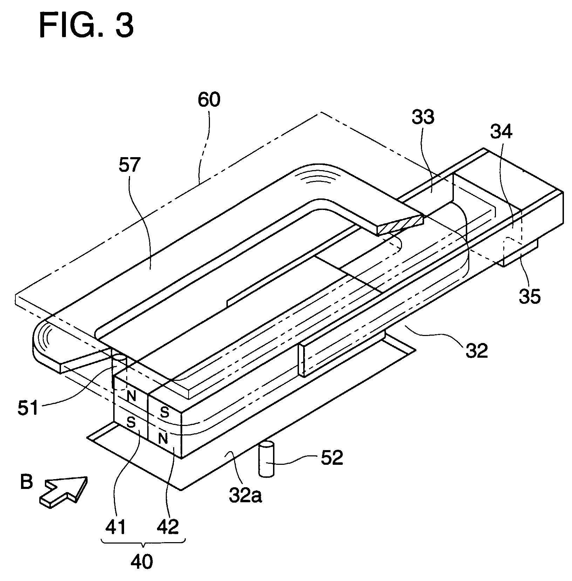

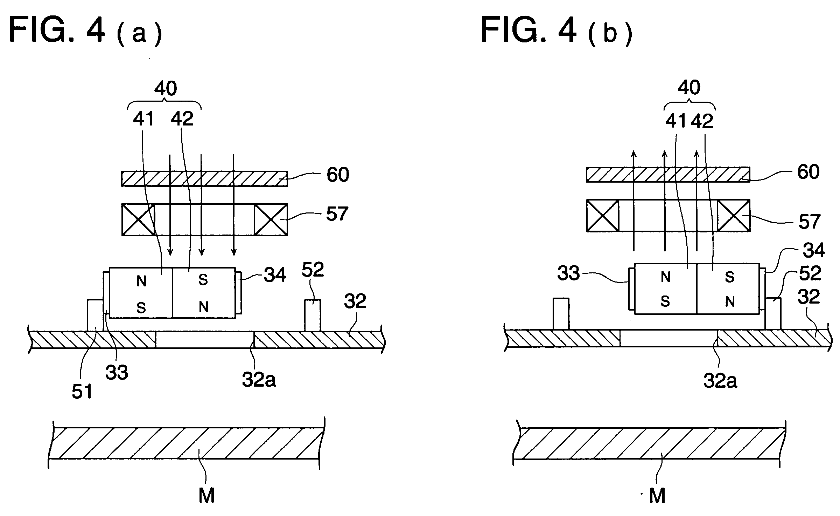

Referring to Fig. 3 and Fig. 4, the second example of the embodiments will now be described.

A center hole 32a of base 32 is open along the direction perpendicular to the recording tracks fabricated on the surface of magneto-optics disk M, above which base 32 is located.

A couple of parallel leaf springs 33 and 34 serving as a guiding means, which are flexible in the direction substantially parallel to the surface of magneto-optics disk M, are located at the upper side of center hole 32a wherein one ends of leaf springs 33 and 34 are stuck into support member 35 fixed on base 32.

Compound magnet 40 comprised of first and second bar type magnets 41 and 42 is fixed between the other ends of leaf springs 33 and 34.

The S and N poles of the first magnet 41 are arranged along the base side and the upper side of the magnet, respectively. Conversely, the S and N poles of the second magnet 42 are arranged along the upper side and the base side of the magnet, respectively.

On the other hand, the first and the second stoppers 51 and 52 are fixed at both sides of hole 32 so that compound magnet 40, supported by the two leaf springs 33 and 34, is movable between them, wherein the first and the second stoppers 51 and 52 are a stopper means which compound magnet 40 touches.

In order to suppress the impulsive noise caused by collisions between compound magnet 40 and stoppers 51 and 52, an elastic material is employed for stoppers 51 and 52.

Coil 57 as a driving means is located at the upper side of compound magnet 40, and moreover, plate 60 as a conductive member (herein, for instance, aluminum) is mounted on the upper side of coil 57.

When no electric current flows in coil 57 (i.e. in the reading mode), compound magnet 40 is held at the center of coil 57 in a neutral position, supported by the two leaf springs 33 and 34.

As shown in Fig. 4(a), when an electric current flows in coil 57 to generate a magnetic field directed onto magneto-optics disk M at the center of coil 57, compound magnet 40 is moved by the generated force so as to shift the second magnet 42 to the center of coil 57, until compound magnet 40 contacts stopper 51 and then, compound magnet 40 reaches the first position.

Under the above conditions, an additional magnetic field is applied onto magneto-optics disk M by the second magnet 42 to enable, for instance, an erasing action for the recorded data.

Conversely, as shown in Fig. 4(b), when an electric current flows opposite in coil 57, the magnetic field direction generated by coil 57 is reversed. Then, compound magnet 40 is also reversed by the force generated so as to shift the first magnet 41 to the center of coil 57, until compound magnet 40 contacts stopper 52 and then, compound magnet 40 reaches the second position.

Under the above conditions, an additional magnetic field (the direction of which is opposite to that of the erasing mode) is applied onto magneto-optics disk M by the first magnet 41 to enable, for instance, a recording action for incoming data.

When compound magnet 40 reaches the second position by reverse movement from the first position, the compound magnet 40 would start to bounce due to the elastic collision between compound magnet 40 and stopper 52.

Bouncing of magnet 1 would result in induction of eddy-currents in conductive plate 60, since the magnetic flux applied to conductive plate 60 would fluctuate greatly within a short period of time. These eddy-currents would also induce a magnetic flux so as to impede movement of compound magnet 40, resulting in reduction of the magnetic field reversal time T associated with the reduction of bounces of compound magnet 40.

Requiring no complicated configuration change, the above mentioned effect could be attained only by mounting conductive plate 60 near the poles of compound magnet 40 located at the first or the second position.

The embodiments described herein are examples when elastic materials are employed for the stopper itself or for the buffer member which the stopper would contact in order to restrict movement of the magnet. According to the present invention, however, it is apparently possible to suppress the impulsive noise without employing elastic materials for the stopper means. Therefore, it is not necessary to employ elastic materials.

In addition, a magneto-optics memory apparatus which incorporates a magneteic field generator embodied the present invention comprises a rotational driving means to rotate a magneto-optics medium and an optical head for recording, reading and/or erasing of data by irradiating a modulated laser beam onto a magneto-optics medium.

Further, in the above embodiment, the stopper to stop the movement of the magnet by coming in physical contact with it is employed. However, another stopper to stop the movement of the magnet by exerting a magnetic force in a direction opposite to the moving direction of the magnet be also employed.

More concretely, the another stopper is provided with a magnetic sensor, such as a Hall element and a control means to adjust electric current flowing in a coil in accordance with the output from the magnetic sensor. In a breaking method employing the another stopper, in the case that the magnetic sensor is provided at the position where the amount of passing magnet flux becomes the maximum when the magnet locates at the first position or the second position or in the case that the magnetic sensor is provided at the position where a line extended from the straight line connecting N pole with S pole of the magnet crosses the magnet sensor when the magnet locates at the first position or the second position, the control means adjusts the electric current flowing in the coil in such a manner that the output of the magnetic sensor is stabilized at its maximum or minimum value in the fastest way, thereby breaking the moving magnet with the magnetic force.

Alternatively, in the breaking method , in case that the magnetic sensor is provided at the position where the amount of passing magnetic flux becomes zero when the magnet locates at the first position or the second position, the control means adjust the electric current flowing in the coil in such a manner that the output of the magnetic sensor becomes zero in the fastest way, thereby breaking the moving magnet with the magnetic force.

Finally, as mentioned above, a magnetic field generator or a magneto-optics memory apparatus which embodies the present invention will make it possible to reduce the magnetic field reversal time T with a simple configuration.

Disclosed embodiment can be varied by a skilled person without departing from the spirit and scope of the invention.

## Claims

1. A magnetic field generator, comprising:
a magnet to apply a magnetic field onto a magneto-optics recording medium;
a driving means for moving said magnet from a first position where said magnet applies a magnetic field in a direction substantially perpendicular to the surface of said magneto-optics recording medium, to a second position where the direction of the magnetic field is opposite to that of the first position, and
a conductive member located near the pole of said magnet parking at the first or the second position.

2. The magnetic field generator according to claim 1, wherein the material of said conductive member is aluminum.

3. The magnetic field generator according to claim 1 or 2, wherein said conductive member is located at such a position where a total amount of the magnetic flux crossing over said conductive member is maximum when said magnet moves from the first position to the second position or moves from the second position to the first position.

4. The magnetic field generator according to claim 1 or 2, wherein said conductive member is located at such a position where a maximum amount of the magnetic flux crosses over said conductive member when,said magnet parks at the first or the second position.

5. The magnetic field generator according to any one of claims 1 to 4, wherein the thickness of said conductive member is in the range of 0.1 mm to 5 mm.

6. The magnetic field generator according to to any one of claims 1 to 4, wherein the thickness of said conductive member is in the range of 0.5 mm to 1 mm.

7. The magnetic field generator according to to any one of claims 1 to 6, comprising a stopper member for limiting the movement of said magnet from the first or the second position.

8. The magnetic field generator according to claim 1, wherein elastic materials are employed for either said stopper menber itself or a buffer member which said stopper member would contact in order to restrict the movement of the magnet.

9. A magneto-optics recording apparatus, comprising:
(1) a magnetic field generator as defined in any one of claims 1 to 8;
(2) a rotational driving means to rotate a magneto-optics medium;
(3) an optical head for recording, reading and/or erasing of data by irradiating a modulated laser beam onto a magneto-optics medium.
